# FASCICULE DE BREVET EUROPEEN

(11) **EP 2 516 835 B1**
(45) Date de publication et mention de la délivrance du brevet: **02.07.2014**
(21) Numéro de dépôt: 10795728.4
(22) Date de dépôt: 22.12.2010
(51) Int. Cl.: F02M 25/07, F02D 41/00

(54) **PROCEDE DE COMMANDE D'UN CIRCUIT EGR D'UN MOTEUR DE VEHICULE AUTOMOBILE.**
VERFAHREN ZUR STEUERUNG EINES AGR-SCHALTKREISES BEI EINEM MOTORFAHRZEUG
METHOD FOR CONTROLLING AN EGR CIRCUIT IN A MOTOR VEHICLE ENGINE

(30) Priorité: 22.12.2009 FR 0906248
(43) Date de publication de la demande: 31.10.2012
(73) Titulaire: Valeo Systèmes de Contrôle Moteur, 95800 Cergy Saint-Christophe (FR)
(72) Inventeur: HODEBOURG, Grégory, F-78500 Sartrouville (FR); ADENOT, Sébastien, F-95300 Pontoise (FR)
(74) Mandataire: Cardon, Nicolas
(86) Numéro de dépôt international: PCT/EP2010/070595
(87) Numéro de publication internationale: WO 2011/076901

(56) Documents cités:
- EP-A2- 0 900 930
- EP-A2- 0 992 668
- EP-A2- 1 136 688
- FR-A1- 2 900 455
- FR-A1- 2 926 114
- FR-A1- 2 926 126
- JP-A- 2008 101 579
- US-A1- 2003 188 727

## Description

L'invention concerne un procédé de commande d'un circuit de recirculation des gaz d'échappement d'un moteur thermique à combustion interne de véhicule automobile.

Un moteur thermique de véhicule automobile comporte une chambre de combustion, généralement formée par une pluralité de cylindres, dans laquelle un mélange de comburant et de carburant est brûlé pour générer le travail du moteur. Le comburant comporte de l'air, qui peut être comprimé ou pas, selon que le moteur comporte un compresseur ou non; lorsqu'il est comprimé, on parle d'air de suralimentation. L'air (souvent désigné "air frais") peut par ailleurs être mélangé à des gaz d'échappement; on parle de gaz d'échappement recirculés, ce mode de fonctionnement étant typiquement désigné par l'homme du métier par l'acronyme EGR, qui signifie "Exhaust Gas Recirculation" en anglais. Les gaz admis dans la chambre de combustion sont dénommés gaz d'admission ; les gaz d'admission peuvent donc être composés d'air frais seul, d'un mélange d'air frais et de gaz d'échappement ; le débit des gaz d'admission peut être régulé par une vanne de type papillon commandée en fonction de l'enfoncement de la pédale d'accélérateur du véhicule pour réguler le régime moteur.

Dans le cas d'un moteur avec des moyens de compression tels qu'un compresseur ou un turbocompresseur, l'air est admis dans le circuit d'admission du moteur, comprimé par le compresseur, refroidi et admis dans les cylindres où il est brûlé avec le carburant puis évacué par les canalisations d'échappement. Les gaz d'échappement entraînent une turbine, solidaire du compresseur et formant avec lui le turbocompresseur. La recirculation des gaz d'échappement peut être dite "basse pression", lorsqu'elle est faite sur des gaz d'échappement prélevés après la turbine et réintroduits avant le compresseur, ou "haute pression", lorsqu'elle est faite avec des gaz prélevés avant la turbine et réintroduits après le compresseur ; les deux types de recirculation peuvent être combinés. A titre d'exemple, la recirculation basse pression permet, pour un moteur à essence, de réduire la température d'échappement (et donc la consommation de carburant puisqu'il n'est dès lors pas nécessaire de trop enrichir le mélange de combustion) et d'éviter les phénomènes de cliquetis à fort taux de compression du moteur ; pour un moteur diesel, elle permet de diminuer la pollution pour être en accord avec les normes environnementales.

Dans le cas d'une boucle de recirculation des gaz d'échappement basse pression par exemple, une vanne dite "trois voies" est généralement prévue pour le contrôle du taux d'EGR c'est-à-dire de la proportion de gaz d'échappement recirculés dans le débit total de gaz d'admission entrant dans le moteur. Une telle vanne trois voies comporte deux conduits d'entrée, l'un pour l'air frais et l'autre pour les gaz d'échappement recirculés (pour parlera parfois dans la suite, concernant les gaz d'échappement recirculés, de "gaz EGR") ; les gaz EGR sont généralement refroidis avant leur mélange à l'air frais. La vanne trois voies comporte par ailleurs un conduit de sortie communiquant avec les conduits d'entrée pour recevoir l'air frais et/ou les gaz EGR ; ce conduit de sortie débouche par exemple dans le compresseur à partir duquel les gaz sont guidés dans un refroidisseur (ou dans une voie de dérivation de ce refroidisseur) avant leur admission dans le moteur. Bien sûr, la vanne trois voies peut être remplacée par deux vannes simples disposées, l'une dans le conduit d'admission d'air frais, l'autre dans le conduit de recirculation des gaz d'échappement. Le débit de gaz qui traverse une vanne est régulé par un moyen d'obturation tel qu'un volet ou un papillon.

On a vu que plusieurs modes opératoires de la vanne trois voies et donc du moteur peuvent être envisagés. Le moteur peut ne recevoir que de l'air frais, sans gaz EGR ou un mélange d'air frais et de gaz EGR, la différence de pression entre l'échappement et l'admission du moteur étant suffisante pour assurer la recirculation des gaz d'échappement. Quand la différence de pression n'est pas suffisante pour la recirculation des gaz d'échappement et pour assurer le bon taux d'EGR, on peut créer une contre-pression par étranglement de la voie d'échappement en aval de la boucle EGR, pour ainsi forcer une partie des gaz d'échappement vers la voie d'admission du moteur. Cette solution, par sa complexité, n'est toutefois pas très satisfaisante et l'invention de la présente demande est une autre solution au problème de la création d'une contre-pression pour assurer un débit EGR correct.

FR 2926114 divulgue un procédé de commande d'un circuit de recirculation des gaz d'échappement d'un moteur à combustion interne de véhicule automobile.

C'est ainsi que l'invention concerne un procédé de commande d'un circuit de recirculation des gaz d'échappement d'un moteur à combustion interne de véhicule automobile, le moteur étant relié à un circuit d'admission d'air et à un circuit d'échappement de gaz relié au circuit d'admission d'air par le circuit de recirculation, une première vanne régulant le débit d'air en amont du circuit de recirculation et une seconde vanne régulant le débit de gaz d'échappement recirculés dans le circuit de recirculation, procédé caractérisé par le fait qu'il comporte les étapes suivantes :
a) la première vanne étant ouverte, on ouvre progressivement la seconde vanne (16), la seconde vanne (16) s'ouvrant depuis sa position de fermeture à 0° d'angle;
b) si la seconde vanne est ouverte d'un angle supérieur à une valeur comprise entre 25° et 35°, on ferme progressivement la première vanne concomitamment à l'ouverture de la seconde vanne.

Grâce à l'invention, le taux d'EGR peut être sensiblement augmenté par la fermeture de la vanne d'air qui crée un phénomène d'aspiration des gaz EGR. Le pilotage de ce taux d'EGR est en outre facilité. En effet, le choix d'un angle compris entre 25° et 35° pour initier la fermeture du volet d'air a pour conséquence que la courbe du taux d'EGR en fonction de l'angle d'ouverture de la vanne EGR augmente constamment, sans ralentissement notable, c'est-à-dire que sa dérivée seconde est sensiblement toujours positive. On peut donc directement piloter le taux d'EGR à partir de l'ouverture de la vanne EGR, de manière efficace.

L'invention est particulièrement avantageuse pour la commande de la recirculation de gaz d'échappement basse pression d'un moteur diesel. Cela permet une régulation plus linéaire et progressive du taux d'EGR en fonction de l'ouverture de la vanne, ce qui améliore la précision du contrôle de la vanne et donc du taux d'EGR.

Selon une forme de réalisation, l'ouverture de la seconde vanne est interrompue à un angle d'ouverture compris entre 65 et 85°, la première vanne étant alors totalement fermée.

Ainsi, la plage de fermeture de la première vanne est rapide.

Selon une forme de réalisation, la première vanne est agencée pour autoriser en position fermée le passage d'un courant de fuite d'air.

Ceci permet de garantir un taux minimum d'air frais pour le fonctionnement du moteur.

Selon une forme de réalisation, les première et seconde vannes sont agencées dans une vanne trois voies comportant une voie d'entrée avec la première vanne, une voie d'entrée avec la seconde vanne et une voie de sortie communiquant directement ou indirectement avec un collecteur d'admission de gaz dans le moteur.

Une telle mise en oeuvre est compacte et facile à piloter.

Selon une forme de réalisation dans ce cas, la vanne trois voies comportant un moteur unique d'entraînement de la première vanne et de la seconde vanne, la vanne trois voies présente au moins deux modes de fonctionnement :
- un premier mode dans lequel la rotation du moteur entraîne l'ouverture ou la fermeture de la seconde vanne, sans entraînement de la première vanne qui est ouverte et
- un deuxième mode dans lequel la rotation du moteur entraîne la fermeture de la première vanne concomitamment à l'ouverture de la seconde vanne, la fermeture de la première vanne étant initiée au passage d'un angle d'ouverture de la seconde vanne compris entre 25° et 35°.

L'invention sera mieux comprise à l'aide de la description suivante de la forme de réalisation préférée du procédé de commande de l'invention, en référence aux planches de dessins annexées, sur lesquelles :
- la figure 1 est une représentation schématique d'un moteur permettant la mise en oeuvre de la forme de réalisation préférée du procédé de commande de l'invention et de ses circuits d'admission, d'échappement et de recirculation ;
- les figures 2a, 2b, 2c et 2d représentent quatre modes d'utilisation de la vanne EGR de la figure 1 pour la mise en oeuvre de la forme de réalisation préférée du procédé de commande de l'invention ;
- la figure 3 est une représentation graphique de la section de passage pour les gaz au niveau des volets de la vanne EGR de la figure 1 en fonction de la position angulaire du volet de régulation du débit de gaz EGR pour la mise en oeuvre de la forme de réalisation préférée du procédé de commande de l'invention ;
- la figure 4 est une représentation graphique du taux d'EGR en fonction de la position angulaire du volet de régulation du débit de gaz EGR dans le cadre la mise en oeuvre de la forme de réalisation préférée du procédé de commande de l'invention ;
- les figures 5a et 5b sont des représentations en perspective de la vanne EGR de la figure 1 et
- les figures 6a et 6b sont des représentations en vue de dessus de la vanne EGR de la figure 1, dans deux modes d'utilisation différents.

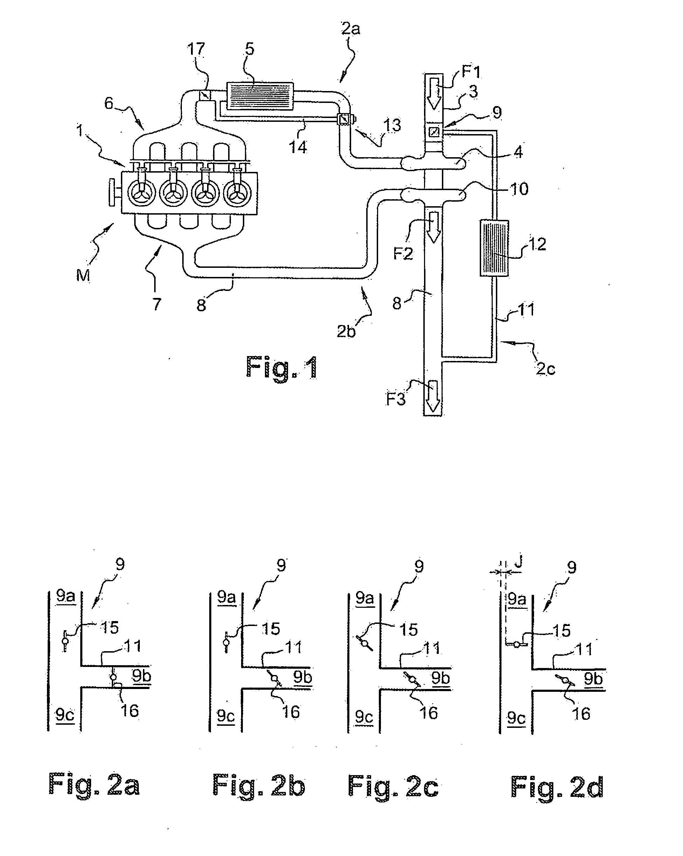

En référence à la figure 1, un moteur thermique M à combustion interne de véhicule automobile comporte une chambre de combustion 1 comportant une pluralité de cylindres, en l'espèce au nombre de quatre, et destinée à recevoir un mélange de comburant et de carburant (ici du diesel) dont la combustion dans les cylindres génère le travail du moteur M. Le fonctionnement du moteur M est classique : les gaz sont admis dans la chambre de combustion 1, y sont comprimés, brûlés puis expulsés sous forme de gaz d'échappement; il s'agit des quatre temps classiques d'un moteur thermique (admission, compression, combustion, échappement).

Le circuit 2a d'admission de gaz dans le moteur M comporte une canalisation 3 d'admission d'air d'alimentation ou air frais (dont le flux est représenté par la flèche F1), un compresseur 4 des gaz d'alimentation, qui est en l'espèce un turbocompresseur, et un échangeur de chaleur 5, de refroidissement des gaz issus du compresseur 4. Cet échangeur de chaleur 5 est communément désigné par l'homme du métier par son acronyme "RAS", qui signifie "refroidisseur d'air de suralimentation"; sa fonction est en effet de refroidir les gaz d'admission et en particulier l'air, dont on dit qu'il est suralimenté puisqu'il est comprimé. En sortie du RAS 5, les gaz débouchent dans un collecteur 6 d'admission des gaz dans la chambre de combustion 1 du moteur M, le collecteur 6 formant une boîte d'entrée des gaz dans la culasse du moteur M. En l'espèce, le circuit d'admission 2a comporte une dérivation 14 de la voie contenant le RAS 5, la régulation des gaz entre la voie refroidie et la voie non refroidie 14 étant faite par une vanne 13, de manière connue en soi. En amont du collecteur 6 d'admission des gaz dans le moteur M, le circuit d'admission comporte une vanne 17 comportant un obturateur de type papillon dont la fonction est de régler le débit de gaz pour la régulation du régime moteur dans le cas d'un moteur essence. Dans le cas d'un moteur diesel, le papillon 17 est généralement dénommé « doseur » ; cette vanne-papillon 17 est commandé par une unité de contrôle du moteur (typiquement désignée par l'acronyme ECU qui signifie Engine Control Unit en anglais), bien connue de l'homme du métier.

Le circuit 2b d'échappement de gaz comporte, en sortie de la chambre de combustion 1 du moteur M, un collecteur 7 des gaz d'échappement relié à une voie ou canalisation 8 d'échappement des gaz. Le circuit d'échappement 2b comporte par ailleurs une turbine 10, solidaire en rotation du compresseur 4 des gaz d'admission et formant avec lui un turbocompresseur. La turbine 10 est entraînée par les gaz d'échappement de la voie d'échappement 8, dont le flux est schématisé par la flèche F2.

Enfin, le circuit d'échappement 2b est connecté à un circuit 2c de recirculation des gaz d'échappement comportant une canalisation 11 de guidage des gaz d'échappement recirculés ("gaz EGR") pour prélever des gaz d'échappement dans le circuit d'échappement 2b, à proximité de sa sortie, et les réintroduire dans le circuit d'admission 2a, en l'espèce en amont du compresseur 4, au niveau d'une vanne 9, qui est en l'espèce une vanne trois voies 9, que l'on nommera par la suite vanne EGR 9 et qui forme le lieu ou zone de connexion du circuit de recirculation 2c au circuit d'admission 2a. Une telle recirculation des gaz d'échappement est dite basse pression, puisqu'elle est faite sur des gaz d'échappement en sortie du circuit d'échappement 2b (en aval de la turbine 10), qui sont à relativement basse pression. Un refroidisseur 12 de ces gaz d'échappement recirculés est également prévu dans le circuit de recirculation 2c. Les gaz qui ne sont pas recirculés forment les gaz d'échappement du véhicule, dont le flux est désigné par la flèche F3.

La vanne EGR 9 comporte une voie 9a (ou conduit 9a) d'entrée d'air d'alimentation, une voie 9b (ou conduit 9b) d'entrée de gaz EGR et une voie 9c (ou conduit 9c) de sortie de gaz qui forment les gaz d'admission (et dont la composition varie en fonction du débit des gaz issus des voies 9a, 9b d'entrée d'air et de gaz EGR). La vanne EGR 9 comporte un volet 15 dans sa voie d'entrée d'air 9a (ci-après dénommé "volet d'air 15") et un volet 16 dans sa voie d'entrée de gaz EGR 9b (ci-après dénommé "volet de gaz EGR 16"). Fonctionnellement, et comme on le voit particulièrement bien sur les figures 2a à 2c, la vanne EGR 9 remplit donc la fonction de deux vannes, l'une régulant le débit d'air frais et l'autre le débit de gaz EGR.

On présente ci-dessous quatre modes de fonctionnement de la vanne EGR 9 dans leur généralité, la mise en oeuvre de ces modes de fonctionnement et en particulier l'évolution des degrés d'ouverture des volets 15, 16 l'un par rapport à l'autre pouvant varier en fonction des formes de réalisation de la vanne EGR 9.

Dans un premier mode de fonctionnement de la vanne EGR 9 représenté sur la figure 2a et correspondant à un fonctionnement du moteur M sans recirculation des gaz d'échappement (utile par exemple si le moteur fonctionne dans un environnement particulièrement froid), le volet d'air 15 est ouvert (totalement ou partiellement) et le volet de gaz EGR 16 est fermé, obstruant ainsi totalement la canalisation de recirculation 11.

Dans un deuxième mode de fonctionnement de la vanne EGR 9 représenté sur la figure 2b et qui correspond à l'initiation d'un fonctionnement du moteur M avec recirculation des gaz d'échappement, le volet de gaz EGR 16 est progressivement ouvert tandis que le volet d'air 15 reste totalement ouvert. Une partie des gaz d'échappement est ainsi mélangée à l'air frais dans les gaz d'admission.

Dans un troisième mode de fonctionnement de la vanne EGR 9 représenté sur la figure 2c, le volet de gaz EGR 16 est progressivement ouvert tandis que le volet d'air 15 est progressivement fermé concomitamment. La fermeture partielle du volet d'air 15 s'ajoute à l'ouverture du volet d'EGR 16 pour augmenter le débit de gaz EGR, par phénomène d'aspiration des gaz EGR en raison de la diminution du débit d'air frais. Ce troisième mode de fonctionnement est initié, conformément à l'invention, à partir d'un angle d'ouverture du volet EGR 16 compris entre 25° et 35°, en l'espèce 28° comme on le verra plus bas.

Dans un quatrième mode de fonctionnement de la vanne EGR 9 représenté sur la figure 2d, le volet de gaz EGR 16 est partiellement ouvert (et dans son état d'ouverture maximal de la cinématique qui lui a été assignée) et le volet d'air 15 est fermé. Le taux d'EGR est ainsi à son maximum. Conformément à la forme de réalisation décrite, le volet d'air 15 est conformé de manière à ce que son diamètre soit inférieur à celui de la canalisation dans laquelle il s'étend pour laisser un jeu "J" entre ses bords et la surface interne de la paroi de ladite canalisation. Ce jeu J autorise le passage d'un courant d'air frais de fuite qui garantit un débit d'air minimal dans le moteur M pour autoriser son fonctionnement dans ce quatrième mode de fonctionnement de la vanne EGR 9.

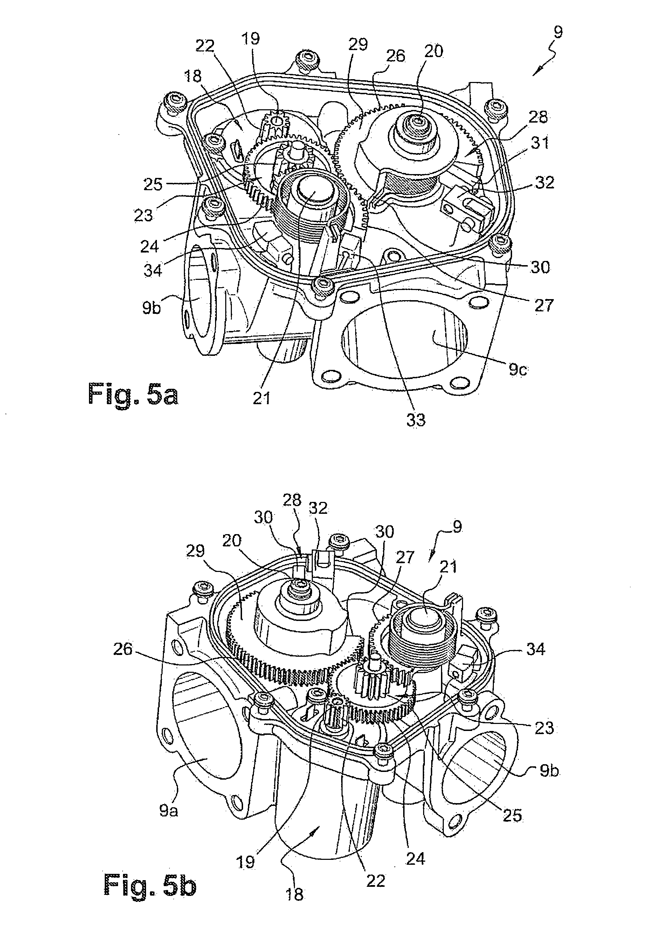

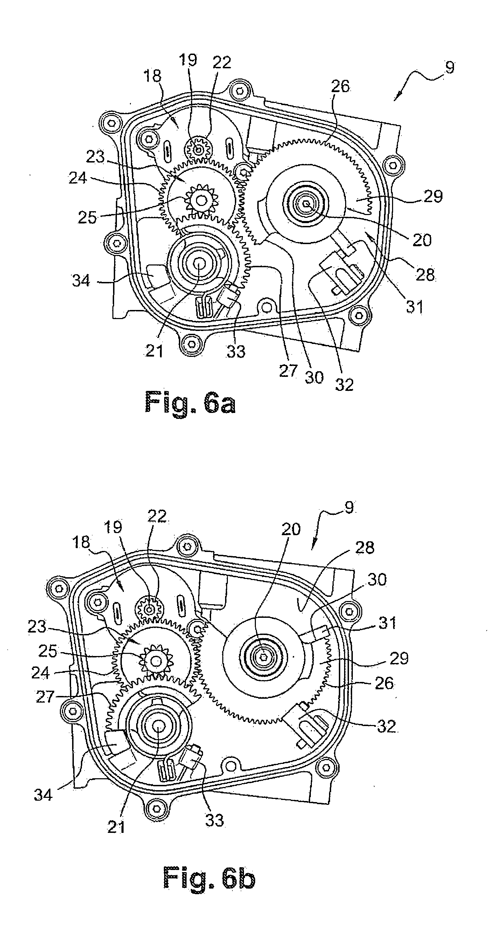

Dans la forme de réalisation préférée de l'invention présentée en référence aux figures 5a, 5b, 6a et 6b, la vanne EGR 9 comporte un moteur unique 18 d'actionnement de ses deux volets 15, 16 ; il s'agit en l'espèce un moteur à courant continu. La vanne EGR 9 comporte un engrenage s'étendant depuis l'arbre 19 du moteur 18 jusqu'à deux arbres 20, 21 d'entraînement en rotation du volet d'air 15 et du volet de gaz EGR 16, respectivement. Ces arbres d'entraînement 20, 21 sont en l'espèce parallèles l'un à l'autre et à l'arbre 19 du moteur 18.

De l'arbre 19 du moteur 18 est solidaire un pignon 22 d'entraînement d'une roue dentée intermédiaire 23 portant une denture périphérique 24 et une denture centrale 25 (ces dentures 24, 25 sont superposées et concentriques). La denture périphérique 24 de la roue intermédiaire 23 engrène avec une couronne dentée 26 d'un mécanisme 28 d'entraînement en rotation du volet d'air 15. La denture centrale 25 de la roue intermédiaire 23 engrène avec une couronne dentée 27 d'entraînement en rotation du volet de gaz EGR 16.

Dans l'exemple considéré, le moteur 18, par son pignon 22, s'il est entraîné en rotation dans le sens contraire des aiguilles d'une montre, entraîne la roue intermédiaire 23 en rotation dans le sens des aiguilles d'une montre. A son tour, la roue intermédiaire 23 entraîne par ses dentures 24, 25 les couronnes 26, 27 d'entraînement en rotation des deux volets 15, 16, dans le sens contraire des aiguilles d'une montre.

Le volet EGR 16 est continûment entraîné en rotation par la rotation de sa denture d'entraînement 27, sans débrayage quelle que soit sa position. Il peut prendre toutes les positions entre sa position de fermeture (correspondant à l'appui de sa denture d'entraînement 27 sur une première butée 33) et une position d'ouverture d'un angle en l'espèce égal à 68° (correspondant à l'appui de sa denture d'entraînement 27 sur deuxième butée 34).

Le mécanisme 28 d'entraînement du volet d'air 15 comporte un système à débrayage agencé pour que la rotation de la couronne 26 n'entraîne pas en rotation l'arbre 20 d'entraînement du volet 15 sur une première partie de sa course et l'entraîne en rotation sur la deuxième moitié de sa course. A cet effet, en l'espèce, le mécanisme 28 comporte une roue 29 portant la couronne 27 et dans laquelle est ménagée une ouverture formant un secteur dans la roue 29, ce secteur ménageant une surface 30 d'appui et d'entraînement. Le mécanisme 28 comporte par ailleurs un doigt d'entraînement 31 (classiquement dénommé "entraîneur" 31) solidaire en rotation de l'arbre 21 d'entraînement du volet 16. Le volet d'air 15 n'est entraîné en rotation que si la surface d'entraînement 30 de la roue 29 vient en appui sur le doigt 31 et l'entraîne en rotation. Ainsi, dans la position de la figure 6a, une rotation dans le sens anti-horaire de la roue 29 n'entraîne aucun mouvement du doigt 31 et donc du volet 15, puisqu'un tel appui n'est pas réalisé ; en revanche, dès que la surface d'entraînement 30 de la roue 29 vient en appui sur le doigt 31 comme par exemple dans la position de la figure 6b, la roue 29 entraîne le volet 15 en rotation. En cas de rotation de la roue 29 dans le sens horaire à partir d'une position avec appui entre la surface d'entraînement 30 et le doigt 31, le volet 15 suit le mouvement de la roue 29 grâce à un ressort rappelant le doigt 31 contre la surface d'entraînement 30, jusqu'à une butée 32 pour le doigt 31 définissant sa position par défaut c'est-à-dire la position ouverte du volet d'air 15.

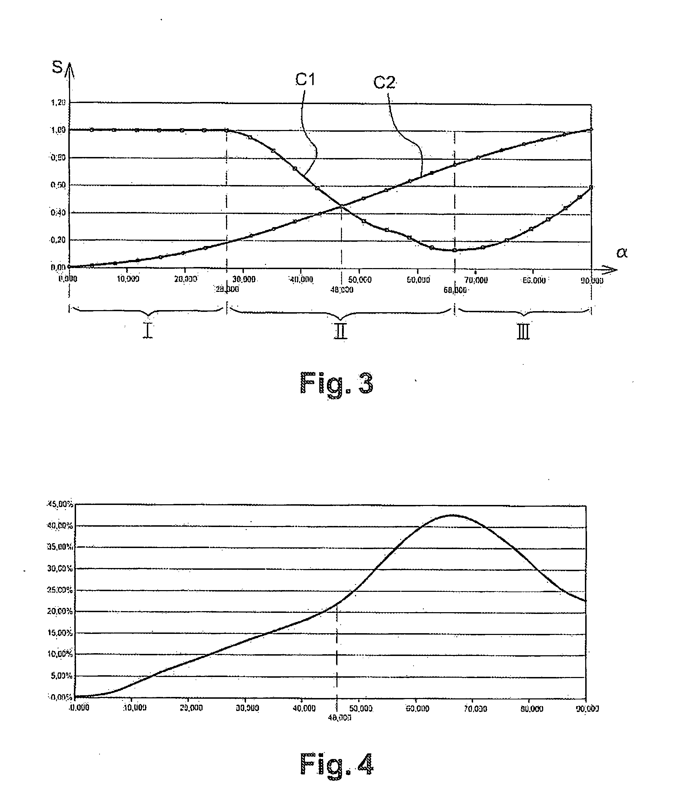

La loi cinématique d'entraînement des volets 15, 16 par le moteur 18 est représentée par le graphique de la figure 3 représentant en ordonnée la section S de passage pour les gaz au niveau des volets 15, 16 (courbe C1 pour la section de passage pour l'air au niveau du volet d'air 15 et courbe C2 pour la section de passage pour les gaz EGR 16 au niveau du volet de gaz EGR 16), en fonction de l'angle α de rotation du volet EGR 16 (qui est en fait linéairement dépendant de l'angle de l'arbre 19 du moteur 18 auquel il est directement engrené). L'unité des sections S de passage des gaz est en pourcentage de leur section maximale. On note que les courbes C1, C2 ne sont pas des portions de droite car la section de passage S n'est pas linéairement dépendante de la rotation des arbres 19, 20, 21 du mécanisme.

Comme on le voit sur la figure 3, dans une première zone I s'étendant en l'espèce entre 0° et 28° d'ouverture du volet EGR 16, seul le volet d'EGR 16 est entraîné en rotation, depuis sa position de fermeture jusqu'à sa position d'ouverture partielle de 28°. Le taux d'EGR augmente alors avec l'ouverture du volet EGR 16. Dans la position de l'engrenage de la figure 6a (avec la couronne 27 du volet EGR 16 en appui sur la première butée 33), le volet EGR 16 est fermé, le volet d'air 15 étant quant à lui ouvert ; il s'agit du mode de fonctionnement décrit en référence à la figure 2a et correspondant au premier point (à gauche) de la figure 3 ; la suite de la courbe de la figure 3 dans cette première zone I correspond à l'entraînement en rotation du volet EGR 16 sans entraînement en rotation du volet d'air 15 (correspondant au mode de fonctionnement décrit en référence à la figure 2b), la surface d'entraînement 30 de la roue 29 d'entraînement du volet d'air 15 n'étant pas venue en appui sur le doigt d'entraînement 31.

Dans une deuxième zone II s'étendant en l'espèce entre 28° et 68° d'ouverture du volet EGR 16, les deux volets 15, 16 sont entraînés en rotation, le volet EGR 16 poursuivant son ouverture progressive et le volet d'air 15 étant quant à lui concomitamment progressivement fermé, par entraînement en rotation de son doigt d'entraînement 31 par la surface d'entraînement 30 de la roue 29 ; il s'agit du mode de fonctionnement décrit en référence à la figure 2c. La position de l'engrenage de la figure 6b correspond à l'ouverture maximale du volet EGR 16 et à la fermeture complète du volet d'air 15, c'est-à-dire au dernier point (à droite) de la figure 3, à 68° d'ouverture du volet EGR 16 ; cette position correspond à l'appui de la couronne 27 d'entraînement du volet EGR 16 sur la deuxième butée 34 ; il s'agit du mode de fonctionnement décrite en référence à la figure 2d. On note sur la figure 3 qu'en ce point de fermeture du volet d'air 15 la section de passage pour l'air n'est pas nulle, puisque le jeu J autour de ce volet 15 ménage un passage de courant d'air de fuite.

Le réglage de l'angle d'ouverture du volet EGR 16 (ici 28°) correspondant au début de cette deuxième zone II - c'est-à-dire au début de l'entraînement en fermeture du volet d'air 15 - se fait grâce à la position du doigt 31 par rapport à la surface d'entraînement 30 de la roue 29 et donc grâce à la butée 32 pour ce doigt 31 ; c'est en effet le début de l'entraînement en rotation du volet d'air 15 et donc du doigt 31 qui est synonyme du début de cette zone II. Conformément à l'invention, cet angle est choisi entre 25° et 35°, en l'espèce égal à 28°.

On note par ailleurs une troisième zone grisée III sur la figure 3 (également représentée sur la figure 4) qui correspond aux valeurs non prises par la vanne EGR 9 décrite, c'est-à-dire les sections de passage qui auraient correspondu à la poursuite de la rotation au-delà de la deuxième butée 34 de la couronne 27 d'entraînement du volet EGR 16. C'est par réglage de cette butée 34 qu'on règle la valeur d'arrêt du volet EGR c'est-à-dire ici 68°.

Le choix de déclencher la fermeture du volet d'air 15 à partir d'un angle d'ouverture du volet EGR 16 compris entre 25° et 35° procure l'avantage d'un taux d'EGR croissant et à dérivée croissante sur toute la gamme d'ouverture du volet EGR 16, comme on le voit sur la figure 4. Entre 0° et 48° d'ouverture du volet EGR 16, le taux d'EGR augmente de manière relativement linéaire avec l'ouverture du volet EGR 16. A 48°, la courbe change de pente pour augmenter plus vite ; cette valeur correspond au croisement des courbes C1, C2 de section de passage de la figure 3. Mais quel que soit le point de la courbe (hormis sur les premiers degrés en l'espèce), la dérivée seconde de cette courbe est sensiblement toujours positive ou nulle. Le pilotage du taux d'EGR est donc aisément possible par pilotage direct de l'ouverture du volet EGR 16.

En résumé, on note principalement trois phases ou modes de fonctionnement pour l'ouverture des volets 15, 16 de la vanne EGR 9 :
- un premier mode I dans lequel la rotation du moteur 18 entraîne l'ouverture ou la fermeture du volet EGR 16, le volet d'air 15 restant ouvert au maximum et
- un deuxième mode II dans lequel la rotation du moteur 18 entraîne l'ouverture du volet EGR 16 concomitamment à la fermeture du volet d'air 15, l'ouverture du volet d'air 15 étant initiée au passage d'un angle d'ouverture du volet EGR 16 compris entre 25° et 35°, en l'espèce 28°.

Le fonctionnement de la vanne EGR 9 (quelle que soit sa forme de réalisation) est par ailleurs classique, de même que celui du moteur M et de ses circuits d'admission 2a, d'échappement 2b et de recirculation 2c. L'ensemble est régulé par l'ECU grâce notamment à la mesure de la différence de pression aux bornes du volet EGR 16 rendue possible et facilitée par le procédé de commande et la vanne 9 de l'invention.

L'invention a été présentée en relation avec une vanne munie de volets mais elle pourrait bien sûr être munie d'autres moyens d'obturation comme des papillons. Par ailleurs, comme déjà envisagé plus haut, la vanne trois voies pourrait être remplacée par deux vannes simples.

L'invention a été décrite en relation avec des formes de réalisations préférées, mais il va de soi que d'autres formes de réalisations sont envisageables. En particulier, les caractéristiques des différentes formes de réalisations décrites peuvent être combinées entre elles, s'il n'y a pas d'incompatibilités.

## Revendications

1. Procédé de commande d'un circuit (2c) de recirculation des gaz d'échappement d'un moteur (M) à combustion interne de véhicule automobile, le moteur (M) étant relié à un circuit d'admission d'air (2a) et à un circuit d'échappement de gaz (2b) relié au circuit d'admission d'air (2a) par le circuit de recirculation (2c), une première vanne (15) régulant le débit d'air en amont du circuit de recirculation (2c) et une seconde vanne (16) régulant le débit de gaz d'échappement recirculés dans le circuit de recirculation (2c), procédé **caractérisé par le fait qu'**il comporte les étapes suivantes :
a) la première vanne (15) étant ouverte, on ouvre progressivement la seconde vanne (16), la seconde vanne (16) s'ouvrant depuis sa position de fermeture à 0° d'angle ;
b) si la seconde vanne (16) est ouverte d'un angle compris entre 25° et 35°, on ferme progressivement la première vanne (15) concomitamment à l'ouverture de la seconde vanne (16).

2. Procédé selon la revendication 1 dans lequel l'ouverture de la seconde vanne (16) est interrompue à un angle d'ouverture compris entre 65 et 85°, la première vanne (15) étant alors totalement fermée.

3. Procédé selon l'une des revendications précédentes dans lequel la première vanne (15) est agencée pour autoriser en position fermée le passage d'un courant de fuite d'air.

4. Procédé selon l'une des revendications précédentes dans lequel les première et seconde vannes (15, 16) sont agencées dans une vanne trois voies (9) comportant une voie d'entrée (9a) avec la première vanne (15), une voie d'entrée (9b) avec la seconde vanne (16) et une voie de sortie (9c) communiquant directement ou indirectement avec un collecteur (6) d'admission de gaz dans le moteur (M).

5. Procédé selon la revendication 4 dans lequel la vanne trois voies (9) comportant un moteur unique (18) d'entraînement de la première vanne (15) et de la seconde vanne (16), la vanne trois voies (9) présente au moins deux modes de fonctionnement :
- un premier mode (I) dans lequel la rotation du moteur (18) entraîne l'ouverture ou la fermeture de la seconde vanne (16), sans entraînement de la première vanne (15) qui est ouverte et
- un deuxième mode (II) dans lequel la rotation du moteur (18) entraîne la fermeture de la première vanne (15) concomitamment à l'ouverture de la seconde vanne (16), la fermeture de la première vanne (15) étant initiée au passage d'un angle d'ouverture de la seconde vanne (16) compris entre 25° et 35°.

## Patentansprüche

1. Verfahren zum Steuern eines Abgasrückführungskreises (2c) einer Brennkraftmaschine (M) eines Kraftfahrzeugs, wobei die Maschine (M) mit einem Lufteinlasskreis (2a) und mit einem Abgaskreis (2b), der mit dem Lufteinlasskreis (2a) durch den Rückführungskreis (2c) verbunden ist, verbunden ist, wobei ein erstes Ventil (15) den Luftdurchsatz stromaufseitig des Rückführungskreises (2c) reguliert und ein zweites Ventil (16) den Durchsatz rückgeführter Abgase in dem Rückführungskreis (2c) reguliert, wobei das Verfahren **dadurch gekennzeichnet ist, dass** es die folgenden Schritte umfasst:
a) wenn das erste Ventil (15) geöffnet ist, wird das zweite Ventil (16) allmählich geöffnet, wobei sich das zweite Ventil (16) aus seiner Schließposition, die einem Winkel von 0° entspricht, öffnet;
b) falls das zweite Ventil (16) mit einem Winkel im Bereich von 25° bis 35° geöffnet ist, wird das erste Ventil (15) gleichzeitig mit dem Öffnen des zweiten Ventils (16) geschlossen.

2. Verfahren nach Anspruch 1, wobei das Öffnen des zweiten Ventils (16) bei einem Öffnungswinkel im Bereich von 65° bis 85° unterbrochen wird, wobei dann das erste Ventil (15) vollständig geschlossen ist.

3. Verfahren nach einem der vorhergehenden Ansprüche, wobei das erste Ventil (15) dafür ausgelegt ist, in der geschlossenen Position den Durchgang eines Luftleckstroms zuzulassen.

4. Verfahren nach einem der vorhergehenden Ansprüche, wobei das erste und das zweite Ventil (15, 16) in einem Dreiwegeventil (9) angeordnet sind, das einen Einlassweg (9a) mit dem ersten Ventil (15), einen Einlassweg (9b) mit dem zweiten Ventil (16) und einen Auslassweg (9c), der direkt oder indirekt mit einem Abgassammler (6) in der Maschine (M) kommuniziert, umfasst.

5. Verfahren nach Anspruch 4, wobei das Dreiwegeventil (9) einen einzigen Motor (18) für den Antrieb des ersten Ventils (15) und des zweiten Ventils (16) aufweist, wobei das Dreiwegeventil (9) wenigstens zwei Betriebsarten aufweist:
- eine erste Betriebsart (I), in der die Drehung des Motors (18) das Öffnen oder das Schließen des zweiten Ventils (16) ohne Antrieb des ersten Ventils (15), das geöffnet ist, bewirkt, und
- eine zweite Betriebsart (II), in der die Drehung des Motors (18) das Schließen des ersten Ventils (15) gleichzeitig mit dem Öffnen des zweiten Ventils (16) bewirkt, wobei das Schließen des ersten Ventils (15) beim Durchgang eines Öffnungswinkels des zweiten Ventils (16) im Bereich von 25° bis 35° begonnen wird.

## Claims

1. Method of controlling an exhaust gas recirculation circuit (2c) of a motor vehicle internal combustion engine (M), the engine (M) being connected to an air intake circuit (2a) and to an exhaust gas circuit (2b) connected to the air intake circuit (2a) by the recirculation circuit (2c), a first valve (15) regulating the airflow rate upstream of the recirculation circuit (2c) and a second valve (16) regulating the flow rate of recirculated exhaust gases in the recirculation circuit (2c), the method being **characterized in that** it comprises the following steps:
a) with the first valve (15) open, the second valve (16) is progressively opened, the second valve opening from its closed position at an angle of 0°;
b) if the second valve (16) is open by an angle of between 25° and 35°, the first valve (15) is progressively closed concomitantly with the opening of the second valve (16).

2. Method according to Claim 1, in which the opening of the second valve (16) is interrupted at an angle of opening of between 65 and 85°, the first valve (15) then being fully closed.

3. Method according to either of the preceding claims, in which the first valve (15) is designed so that when closed it allows a leakage air current to pass.

4. Method according to one of the preceding claims, in which the first and second valves (15, 16) are arranged in a three-way valve (9) comprising an inlet port (9a) with the first valve (15), an inlet port (9b) with the second valve (16) and an outlet port (9c) communicating directly or indirectly with an intake manifold (6) that admits gas to the engine (M).

5. Method according to Claim 4, in which, with the three-way valve (9) having a single drive motor (18) for driving the first valve (15) and the second valve (16), the three-way valve (9) has at least two modes of operation:
- a first mode (I) in which the rotation of the motor (18) drives the opening or closing of the second valve (16), without driving the first valve (15) which is open, and
- a second mode (II) in which the rotation of the motor (18) drives the closing of the first valve (15) concomitantly with the opening of the second valve (16), the closing of the first valve (15) being begun when the angle of opening of the second valve (16) passes through an angle of between 25° and 35°.
